# DEMANDE DE BREVET EUROPEEN

(11) **EP 2 101 052 A1**
(43) Date de publication de la demande: **16.09.2009**
(21) Numéro de dépôt: 09154912.1
(22) Date de dépôt: 11.03.2009
(51) Int. Cl.: F02C 7/32, F02C 7/36

(54) **Assemblage d'engrenages pour l'entraînement d'accessoires d'une turbine à gaz**

(30) Priorité: 14.03.2008 FR 0851690
(71) Demandeur: HISPANO-SUIZA, 92700 Colombes (FR)
(72) Inventeur: Deperrois, André Raymond Christian, 75014 Paris (FR); Grand, Yvon, 95340 Persan (FR); Mouchnino, Cyril, Franck, 75015 Paris (FR); Pettinotti, Serge, Dominique, 92400 Courbevoie (FR)
(74) Mandataire: Boura, Olivier

(57) **Abrégé**

L'invention concerne un assemblage pour l'entraînement d'accessoires d'une turbine à gaz, comportant un boîtier (12) ayant une face latérale avant (14) et une face latérale arrière (16) et dans lequel sont montés un premier train d'engrenages (18) composé de trois roues dentées (18a-18c) engrenant ensemble et un second train d'engrenages (20) composé de quatre roues dentées (20a-20d) engrenant ensemble, un arbre de transmission de puissance (22) qui est couplé en rotation au premier et au second train d'engrenages au moyen d'une roue dentée double (24) et qui émerge de la face latérale avant du boîtier, et neuf accessoires (26-42) distincts de turbine à gaz montés contre les faces latérales du boîtier et comportant chacun un arbre d'alimentation (26a-42a) qui est couplé en rotation à l'une des roues dentées des deux trains d'engrenages.

## Description

### Arrière-plan de l'invention

La présente invention se rapporte au domaine général des turbines à gaz et concerne plus particulièrement la configuration d'un boîtier pour l'entraînement d'accessoires d'une turbine à gaz.

Le domaine d'application de l'invention est celui des turbines à gaz pour moteurs d'avions ou d'hélicoptères, ainsi que pour les groupes auxiliaires de puissance (ou APU pour « Auxiliary Power Unit »).

Les moteurs à turbine à gaz d'avions ou d'hélicoptères comportent généralement un boîtier pour l'entraînement de plusieurs accessoires de la turbine ou d'équipements annexes, tels que notamment diverses pompes pour la production d'énergie hydraulique, l'alimentation en carburant, la lubrification, des générateurs électriques pour la production de puissance électrique, etc. Un tel boîtier est communément appelé AGB pour « Accessory GearBox ».

De façon connue en soi, un boîtier pour l'entraînement d'accessoires comporte un ou plusieurs trains d'engrenages qui sont composés chacun de plusieurs roues dentées et qui sont entraînés en rotation par un arbre de transmission de puissance, ce dernier étant couplé à un arbre de la turbine. Chaque accessoire est généralement monté contre l'une des faces latérales du boîtier et comporte un arbre d'alimentation venant se coupler sur l'une des roues dentées du ou des trains d'engrenages. Lors du fonctionnement de la turbine, une partie de la puissance mécanique générée est prélevée sur l'arbre de turbine et transmise via l'arbre de transmission de puissance et les trains d'engrenages aux différents accessoires montés sur le boîtier pour les actionner.

Les boîtiers pour l'entraînement d'accessoires varient notamment en fonction du nombre et de la nature des accessoires à alimenter. Lors de l'élaboration d'un boîtier d'entraînement d'accessoires, il est toutefois important de réduire le plus possible l'encombrement et la masse du boîtier, notamment en jouant sur le positionnement des accessoires les uns par rapport aux autres en fonction de leur encombrement individuel et de leur vitesse de rotation. Or, les boîtiers pour l'entraînement d'accessoires connus à ce jour présentent généralement un encombrement et une masse trop importants.

### Objet et résumé de l'invention

La présente invention a donc pour but principal de pallier de tels inconvénients en proposant un assemblage pour l'entraînement d'accessoires d'une turbine à gaz qui permette une réduction importante du volume et de l'encombrement.

Ce but est atteint grâce à un assemblage comportant :
un boîtier ayant une face latérale avant et une face latérale arrière opposée à la face avant et dans lequel sont montés un premier train d'engrenages composé de trois roues dentées engrenant ensemble et un second train d'engrenages composé de quatre roues dentées engrenant ensemble ;
un arbre de transmission de puissance qui est couplé en rotation au premier et au second train d'engrenages au moyen d'une roue dentée double et qui émerge de la face latérale avant du boîtier ; et
neuf accessoires distincts de turbine à gaz montés contre les faces latérales du boîtier et comportant chacun un arbre d'alimentation qui est couplé en rotation à l'une des roues dentées des deux trains d'engrenages.

L'utilisation de seulement huit roues dentées (la roue dentée double de l'arbre de transmission de puissance et les sept roues dentées des deux trains d'engrenages) répartis sur deux trains d'engrenages pour alimenter en puissance neuf accessoires distincts permet de réduire sensiblement l'encombrement et la masse totale de l'assemblage.

Selon une disposition avantageuse, deux des accessoires ont leur arbre d'alimentation respectif couplé en rotation à une même roue dentée de l'un des deux trains d'engrenages et sont montés chacun contre l'une des faces latérales du boîtier.

Selon une autre disposition avantageuse, six accessoires sont montés contre la face latérale arrière du boîtier et trois accessoires sont montés contre la face latérale avant du boîtier.

Selon encore une autre disposition avantageuse, les accessoires comportent : deux générateurs électriques pour fournir de la puissance électrique ; un alternateur à aimant permanent pour fournir du courant électrique à des équipements de la turbine à gaz ; un démarreur pour mettre en route la turbine à gaz ; deux pompes hydrauliques pour fournir de l'huile pressurisée ; une pompe principale à huile ; une pompe principale à carburant ; et un déshuileur centrifuge.

Dans ce cas, les deux générateurs électriques ont de préférence leur arbre d'alimentation respectif couplé en rotation à deux roues dentées adjacentes du premier train d'engrenages et sont montés chacun contre l'une des faces latérales du boîtier. Une telle disposition des générateurs électriques présente l'avantage d'assurer une répartition équilibrée des masses de l'assemblage.

De plus, l'alternateur à aimant permanent a de préférence son arbre d'alimentation couplé en rotation à la roue dentée restante du premier train d'engrenages et est monté contre la face latérale arrière du boîtier.

Le démarreur peut être monté contre la face latérale arrière du boîtier et son arbre d'alimentation être couplé en rotation à la roue dentée double. De la sorte, le chemin d'entraînement du moteur lors du démarrage ne transite par aucun train d'engrenages.

Enfin, les deux pompes hydrauliques, le déshuileur centrifuge et les pompes à huile et à carburant ont avantageusement leur arbre d'alimentation respectif couplé en rotation à l'une des roues dentées du second train d'engrenages, les deux pompes hydrauliques et le déshuileur centrifuge étant montés contre la face latérale arrière du boîtier et les pompes à huile et à carburant étant montées contre la face latérale avant du boîtier.

Selon encore une autre disposition avantageuse, l'arbre de transmission de puissance présente une forme sensiblement conique et est maintenu, à une extrémité, d'une part radialement par un palier à roulements à rouleaux et d'autre part axialement par un palier à roulements à billes, et à l'extrémité opposée radialement par des cannelures de transmission de couple à la roue dentée double. Un tel arrangement permet de contribuer à diminuer la masse globale de l'assemblage en évitant d'avoir recours à un palier à roulement supplémentaire pour le guidage de l'arbre lors de son montage sur le boîtier.

Selon encore une autre disposition avantageuse, le boîtier comporte une pluralité de conduits droits reliés entre eux pour former un circuit d'acheminement d'huile de lubrification vers les roues dentées des deux trains d'engrenages, chaque conduit débouchant à une extrémité sur une face supérieure du boîtier. De préférence, le boîtier est une pièce métallique réalisée par moulage, les emplacements des conduits d'acheminement d'huile de lubrification étant réservés par des volumes cylindriques pleins pouvant être percés directement depuis la face supérieure du boîtier. Il en résulte une simplification lors de la réalisation de l'assemblage.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe longitudinale d'un assemblage pour l'entraînement d'accessoires selon l'invention ;
- la figure 2 est une loupe de la figure 1 montrant le montage de l'arbre de transmission de puissance sur le boîtier ; et
- la figure 3 représente l'assemblage de la figure 1 vu du côté de la face latérale avant du boîtier.

### Description détaillée d'un mode de réalisation

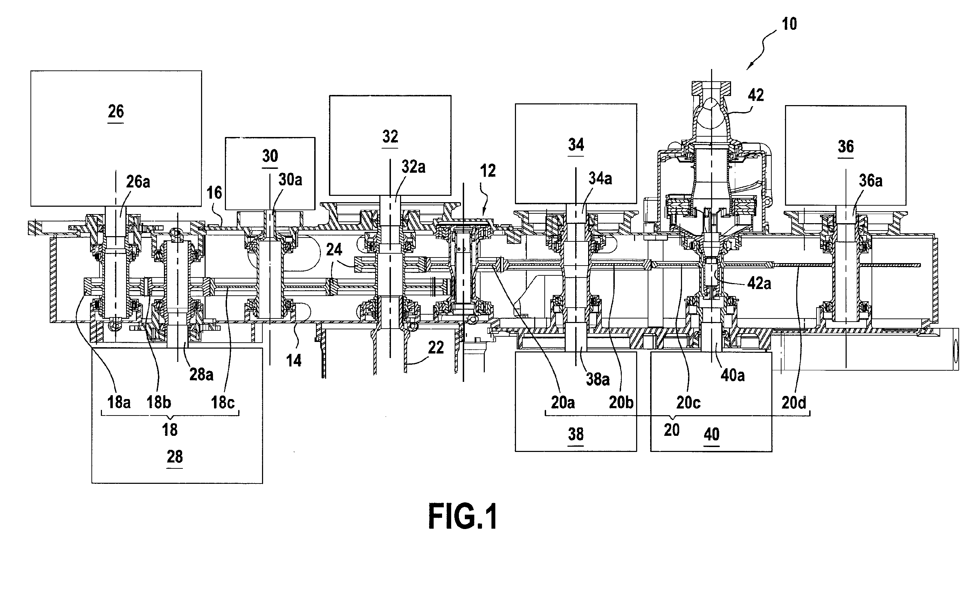

La figure 1 représente en coupe longitudinale un assemblage 10 pour l'entraînement d'accessoires d'une turbine à gaz de moteur d'avion. Bien entendu, l'invention s'applique également aux turbines à gaz de moteurs d'hélicoptères, ainsi qu'aux groupes auxiliaires de puissance.

L'assemblage 10 comporte notamment un boîtier 12 sensiblement parallélépipédique ayant une face latérale avant 14 et une face latérale arrière 16 opposée à la face avant.

Le boîtier 12 renferme deux trains (ou chaînes) d'engrenages qui s'étendent selon une direction longitudinale, à savoir : un premier train d'engrenages 18 composé de trois roues dentées 18a à 18c engrenant ensemble, et un second train d'engrenages 20, différent du premier, composé de quatre roues dentées 20a à 20d engrenant ensemble.

Un arbre de transmission de puissance 22 (partiellement représenté sur la figure 1) prélève de la puissance mécanique sur un arbre de la turbine (non représenté sur les figures) pour la transmettre aux deux trains d'engrenages 18, 20. A cet effet, l'arbre de transmission de puissance 22 est couplé en rotation aux deux trains d'engrenages au moyen d'une roue dentée double 24. Par ailleurs, l'arbre de transmission de puissance émerge de la face latérale avant 14 du boîtier 12, de façon sensiblement perpendiculaire à celle-ci.

Les deux trains d'engrenages 18, 20 ainsi décrits ont pour fonction d'entraîner en rotation une pluralité d'accessoires distincts de turbine. Plus précisément, selon l'invention, ces trains d'engrenages transmettent la puissance mécanique prélevée sur l'arbre de turbine à neuf accessoires distincts montés chacun sur l'une des faces latérales 14, 16 du boîtier 12.

Ces neuf accessoires sont constitués par : deux générateurs électriques 26, 28 pour fournir de la puissance électrique (par exemple à l'avion propulsé par le moteur) ; un alternateur à aimant permanent 30 (ou PMA pour « Permanent Magnet Alternator ») pour fournir du courant électrique à des équipements du moteur ; un démarreur 32 pour mettre en route le moteur ; deux pompes hydrauliques 34, 36 pour fournir de l'huile pressurisée au moteur et/ou à ses équipements ; une pompe principale à huile 38 pour fournir de l'huile de lubrification aux circuits d'huile du moteur et/ou de ses équipements ; une pompe principale à carburant 40 ; et un déshuileur centrifuge 42 (dispositif passif).

Les accessoires 26 à 42 sont montés chacun sur l'une des faces latérales 14, 16 du boîtier 12. Chaque accessoire 26 à 42 comporte en outre un arbre d'alimentation 26a à 42a qui est monté sur une roue dentée de l'un des trains d'engrenages pour être mis en route.

Afin de permettre l'entraînement des neuf accessoires à partir de seulement huit roues dentées (à savoir la roue dentée double 24 de l'arbre de transmission de puissance 22 et les sept roues dentées 18a-18c et 20a-20d des deux trains d'engrenages), deux accessoires ont leur arbre d'alimentation couplé en rotation à une même roue dentée et sont montés contre des faces latérales du boîtier différentes.

Ainsi, sur l'exemple de réalisation de la figure 1, l'une des pompes hydrauliques 34 et la pompe principale à huile 38 sont montées respectivement sur la face latérale arrière 16 et sur la face latérale avant 14 du boîtier et ont leur arbre d'alimentation respectif 34a, 38a couplé en rotation à la même roue dentée 20b du second train d'engrenages 20.

Les accessoires 26 à 42 ont des volumes et des vitesses de rotation qui diffèrent (à l'exception ici de la pompe hydraulique 34 et de la pompe à huile 38 qui ont la même vitesse de rotation car montées sur la même roue dentée). Aussi, il est nécessaire de les monter sur le boîtier de façon à tenir compte de ces paramètres tout en optimisant l'encombrement et la répartition des masses sur l'assemblage.

A cet effet, le premier train d'engrenages 18 de l'assemblage selon l'invention est un train d'engrenages dédié à l'entraînement d'accessoires à vitesses de rotation élevées (supérieures à 10000 tours/min). Quant au second train d'engrenages 20, il est plus spécifiquement dédié à l'entraînement d'accessoires à vitesses de rotation plus lentes (inférieures à 10000 tours/min). Une telle répartition sur un train d'engrenages « rapide » et un train d'engrenages « lent » permet d'éviter d'avoir recours à des écarts de roues dentées importants pour ajuster les vitesses des différents accessoires et contribue ainsi à diminuer l'encombrement et la masse totale de l'assemblage.

Le premier train d'engrenages 18 entraîne donc les deux générateurs électriques 26, 28 et l'alternateur à aimant permanent 30 dont la vitesse de rotation est supérieure à 10000 tours/min. Quant au second train d'engrenages 20, il entraîne les accessoires restants 32 à 42 qui présentent des vitesses de rotation plus faibles.

De façon plus précise, les deux générateurs électriques 26, 28 ont leur arbre d'alimentation respectif 26a, 28a couplé en rotation à deux roues dentées adjacentes (respectivement 18a et 18b sur la figure 1) du premier train d'engrenages et sont montés chacun contre l'une des faces latérales du boîtier. Une telle disposition de part et d'autre du boîtier permet d'équilibrer la masse totale de l'assemblage (ces deux accessoires ont une masse plus importante que les autres accessoires).

Quant à l'alternateur à aimant permanent 30, il a son arbre d'alimentation 30a couplé en rotation à la roue dentée restante 18c du premier train d'engrenages et est monté contre la face latérale arrière 16 du boîtier.

Le démarreur 32 est également monté contre la face latérale arrière 16 du boîtier et son arbre d'alimentation 32a est couplé en rotation à la roue dentée double 24.

Enfin, la pompe hydraulique restante 36, la pompe à carburant 40 et le déshuileur centrifuge 42 ont leur arbre d'alimentation respectif (36a, 40a, 42a) couplé en rotation aux roues dentées restantes (à savoir 20c et 20d) du second train d'engrenages 20, les deux pompes hydrauliques et le déshuileur centrifuge étant montés contre la face latérale arrière 16 du boîtier et les pompes à huile et à carburant étant montées contre la face latérale avant 14 du boîtier.

Il est à noter que la roue dentée restante 20a du second train d'engrenages 20 n'entraîne en rotation aucun accessoire, son rôle étant de transmettre la puissance vers les accessoires du second train d'engrenages et d'augmenter l'espacement entre eux.

Une telle disposition des différents accessoires sur le boîtier permet d'obtenir, d'une part un encombrement et une masse réduits (seuls huit roues dentées sont nécessaires pour entraîner neuf accessoires), et d'autre part une répartition équilibrée des masses sur le boîtier.

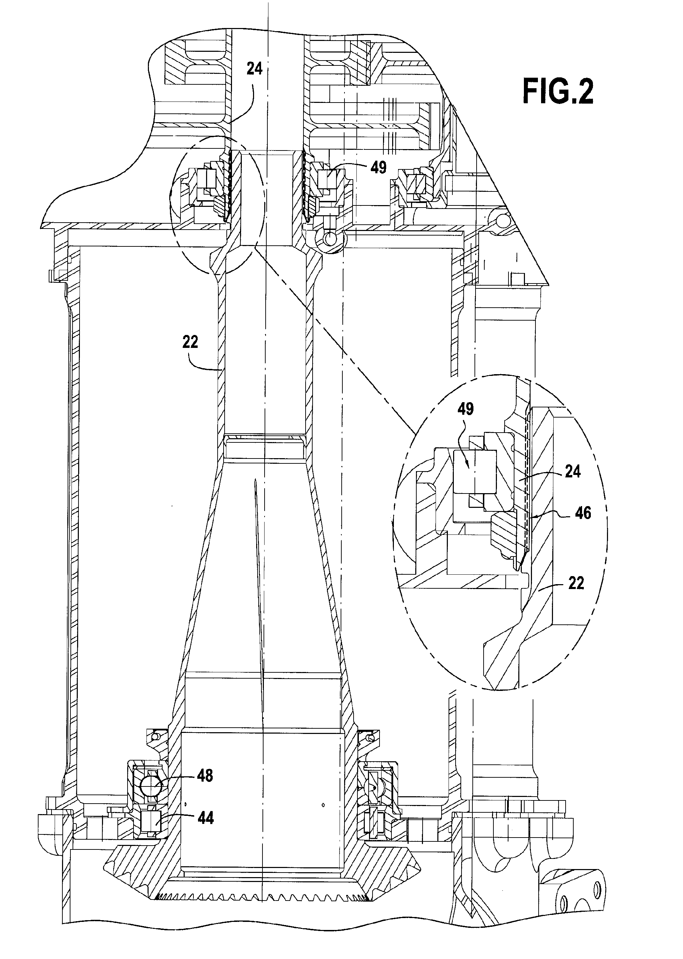

Selon un autre aspect de l'invention représenté plus précisément sur la figure 2, l'arbre de transmission de puissance 22 présente une forme sensiblement conique et est maintenu, à une extrémité, d'une part radialement par un palier à roulements à rouleaux 44 et d'autre part axialement par un palier à roulements à billes 48, et à l'extrémité opposée radialement par des cannelures 46 de transmission de couple à la roue dentée double 24.

Un tel arrangement permet ainsi de s'affranchir de la présence d'un palier à roulements supplémentaire généralement nécessaire pour aider au guidage de l'arbre lors de son montage sur le boîtier. De la sorte, la masse globale de l'assemblage peut être davantage diminuée.

Il est à noter qu'un palier supplémentaire à roulements à rouleaux 49 situé à l'extrémité de l'arbre de transmission de puissance 22 munie des cannelures 46 permet également de reprendre les charges radiales s'exerçant sur celui-ci.

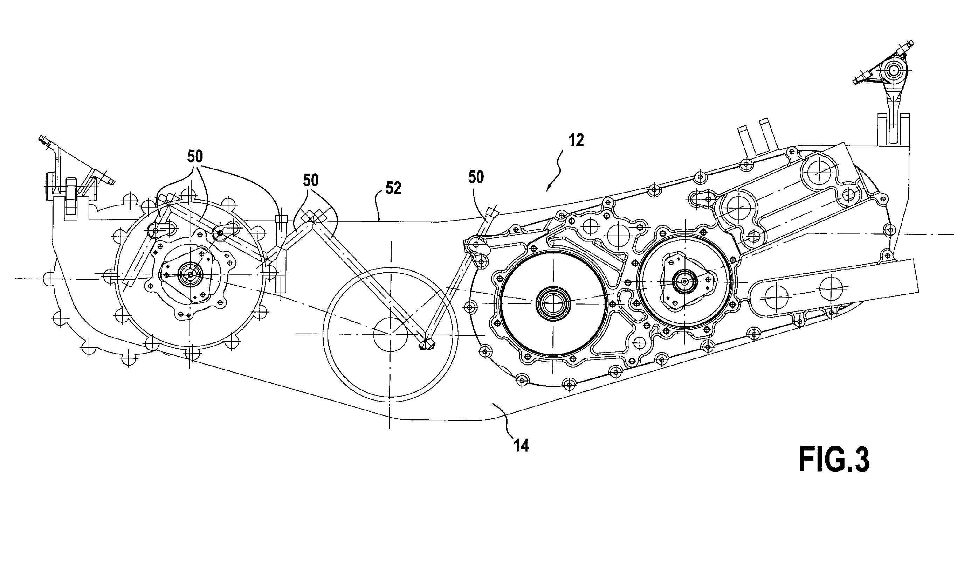

Selon encore un autre aspect de l'invention représenté sur la figure 3, le boîtier 12 comporte, au niveau de sa face latérale avant 14, une pluralité de conduits 50 (au nombre de six sur la figure 3) qui sont reliés entre eux pour former un circuit d'acheminement d'huile de lubrification vers les roues dentées des deux trains d'engranges.

Ces conduits 50 d'acheminement d'huile de lubrification ont la particularité d'être sensiblement droits et de déboucher chacun à l'une de leurs extrémités sur une face supérieure 52 du boîtier. Ainsi, le boîtier 12 étant une pièce métallique réalisée par moulage, les emplacements des conduits 50 d'acheminement d'huile de lubrification peuvent être réservés par des volumes cylindriques pleins qui sont ensuite percés directement depuis la face supérieure 52 du boîtier. Il en résulte une simplification lors de la réalisation de l'assemblage selon l'invention.

## Revendications

1. Assemblage pour l'entraînement d'accessoires d'une turbine à gaz, comportant :
un boîtier (12) ayant une face latérale avant (14) et une face latérale arrière (16) opposée à la face avant et dans lequel sont montés un premier train d'engrenages (18) composé de trois roues dentées (18a-18c) engrenant ensemble et un second train d'engrenages (20) composé de quatre roues dentées (20a-20d) engrenant ensemble ;
un arbre de transmission de puissance (22) qui est couplé en rotation au premier et au second train d'engrenages au moyen d'une roue dentée double (24) et qui émerge de la face latérale avant du boîtier ; et
neuf accessoires (26-42) distincts de turbine à gaz montés contre les faces latérales du boîtier et comportant chacun un arbre d'alimentation (26a-42a) qui est couplé en rotation à l'une des roues dentées des deux trains d'engrenages.

2. Assemblage selon la revendication 1, dans lequel deux des accessoires (34, 38) ont leur arbre d'alimentation respectif (34a, 38a) couplé en rotation à une même roue dentée (20b) de l'un des deux trains d'engrenages et sont montés chacun contre l'une des faces latérales du boîtier.

3. Assemblage selon l'une des revendications 1 et 2, dans lequel six accessoires (26, 30, 32, 34, 36, 42) sont montés contre la face latérale arrière (16) du boîtier et trois accessoires (28, 38, 40) sont montés contre la face latérale avant (14) du boîtier.

4. Assemblage selon l'une quelconque des revendications 1 à 3, dans lequel les accessoires comportent : deux générateurs électriques (26, 28) pour fournir de la puissance électrique ; un alternateur à aimant permanent (30) pour fournir du courant électrique à des équipements de la turbine à gaz ; un démarreur (32) pour mettre en route la turbine à gaz ; deux pompes hydrauliques (34, 36) pour fournir de l'huile pressurisée ; une pompe principale à huile (38) ; une pompe principale à carburant (40) ; et un déshuileur centrifuge (42).

5. Assemblage selon la revendication 4, dans lequel les deux générateurs électriques (26, 28) ont leur arbre d'alimentation respectif (26a, 28a) couplé en rotation à deux roues dentées adjacentes (18a, 18b) du premier train d'engrenages (18) et sont montés chacun contre l'une des faces latérales (14, 16) du boîtier.

6. Assemblage selon la revendication 5, dans lequel l'alternateur à aimant permanent (30) a son arbre d'alimentation (30a) couplé en rotation à la roue dentée restante (18c) du premier train d'engrenages (18) et est monté contre la face latérale arrière (16) du boîtier.

7. Assemblage selon l'une quelconque des revendications 4 à 6, dans lequel le démarreur (32) est monté contre la face latérale arrière (16) du boîtier et son arbre d'alimentation (32a) est couplé en rotation à la roue dentée double (24).

8. Assemblage selon l'une quelconque des revendications 4 à 7, dans lequel les deux pompes hydrauliques (34, 36), le déshuileur centrifuge (42) et les pompes à huile et à carburant (38, 40) ont leur arbre d'alimentation respectif (34a, 36a, 42a, 38a, 40a) couplé en rotation à l'une des roues dentées (20b-20d) du second train d'engrenages (20), les deux pompes hydrauliques et le déshuileur centrifuge étant montés contre la face latérale arrière (16) du boîtier et les pompes à huile et à carburant étant montées contre la face latérale avant (14) du boîtier.

9. Assemblage selon l'une quelconque des revendications 1 à 8, dans lequel l'arbre de transmission de puissance (22) présente une forme sensiblement conique et est maintenu, à une extrémité, d'une part radialement par un palier à roulements à rouleaux (44) et d'autre part axialement par un palier à roulements à billes (48), et à l'extrémité opposée radialement par des cannelures (46) de transmission de couple à la roue dentée double (24).

10. Assemblage selon l'une quelconque des revendications 1 à 9, dans lequel le boîtier (12) comporte une pluralité de conduits droits (50) reliés entre eux pour former un circuit d'acheminement d'huile de lubrification vers les roues dentées des deux trains d'engrenages (18, 20), chaque conduit débouchant à une extrémité sur une face supérieure (52) du boîtier.

11. Assemblage selon la revendication 10, dans lequel le boîtier (12) est une pièce métallique réalisée par moulage, les emplacements des conduits (50) d'acheminement d'huile de lubrification étant réservés par des volumes cylindriques pleins pouvant être percés directement depuis la face supérieure (52) du boîtier.
